# EUROPEAN PATENT SPECIFICATION

(11) **EP 3 112 063 B1**
(45) Date of publication and mention of the grant of the patent: **09.08.2023**
(21) Application number: 15174661.7
(22) Date of filing: 30.06.2015
(51) Int. Cl.: B23B 27/10, B23Q 11/10

(54) **A CUTTING TOOL**
SCHNEIDWERKZEUG
OUTIL DE COUPE

(43) Date of publication of application: 04.01.2017
(60) Divisional application: 16198303.6
(73) Proprietor: Seco Tools AB, 737 82 Fagersta (SE)
(72) Inventor: FORSBERG, Svante, 737 31 Fagersta (SE); JONSSON, Mats, SE 776 92 Hedemora (SE); THELIN, Jimmy, 737 91 Fagersta (SE); LARSSON, Andreas.J, SE-732 47 Arbogat (SE); THURESSON, Jonas, 73733 Fagersta (SE); SUNDEN, Tony, 73732 Fagersta (SE)
(74) Representative: Sandvik

(56) References cited:
- EP-A1- 0 656 239
- EP-A1- 2 789 415
- EP-A1- 2 873 477
- JP-A- 2006 055 917
- JP-A- 2014 231 097
- US-A1- 2011 311 323
- US-A1- 2012 082 522
- US-A1- 2014 334 887
- US-A1- 2015 273 589

## Description

### FIELD OF THE INVENTION

The present invention relates to a cutting tool for metal chip removing machining and, more particularly, to such cutting tools having coolant flow channels.

### BACKGROUND AND SUMMARY

It is advantageous to deliver a coolant closely to a cutting area, using a cutting tool having a coolant supply, directing a coolant to a cutting edge of the cutting insert for minimizing the heat accumulated due to the interaction of a cutting insert with a machined workpiece. Conventional techniques for providing lubrication and/or coolant to cutting edges of cutting inserts typically involve introducing the coolant via openings in a toolholder for the cutting insert, or via spray nozzles directed at the cutting edges such as US 4,848,198.
JP 2014 231097 A discloses a cutting tool, according to the preamble of claim 1, provided with a spray nozzle, which clamp against the top surface of a cutting insert. The spray nozzle comprising a plurality of coolant channels for delivering coolant towards the cutting edge of the cutting insert. Some cutting inserts include channels formed in the cutting inserts that are in flow communication with and facilitate introduction of coolant from channels provided in the toolholder body. The provision of these coolant flow channels in the cutting inserts tends to substantially complicate manufacture of the cutting inserts, and the channels can weaken the cutting insert. It is desirable to provide a cutting tool that facilitate introduction of coolant to the cutting edges of the cutting insert that minimizes manufacturing complexity. It is also desirable to provide a cutting tool that facilitate introduction of coolant to the cutting edge without substantially interfering with the strength of the cutting insert.

US2012/0082522 A discloses a cutting tool comprising a L-shaped locking member.

### SUMMARY OF THE INVENTION

According to an aspect of the present invention, a cutting tool comprises a holder body having a pocket, a cutting insert and a nozzle, said nozzle having a single through hole for a fastening member, said nozzle having a forward end, a rear end and a bottom face, said through hole extending between the bottom face and an opposite top face, at least one internal coolant channel being provided in the nozzle and extending from a first opening to a second opening, said first opening connecting to a coolant supply conduit in the holder body, said second opening serving as exit for the coolant at the forward end, wherein the at least one coolant channel and the first opening are spaced from the through hole to avoid interference therewith, and wherein a single fastening member or screw secures both the cutting insert and the nozzle, wherein the cutting tool comprises a clamping means in the shape of an L-shaped locking member, wherein the cutting insert is clamped in the pocket by means of the L-shaped locking member projecting into a hole of the cutting insert, and wherein the nozzle bottom face is spaced from the cutting insert in assembled state.

According to another aspect of the present invention, the nozzle has a longitudinal axis that intersects the through hole to be able to function as a lever.

According to another aspect of the present invention, the first opening is located at a portion of the bottom face, said portion projecting such that a tangent to the bottom face perpendicular to a through hole axis intersects the first opening to thereby make sure the first opening is positioned close to the coolant supply conduit.

According to another aspect of the present invention, the nozzle is a removable nozzle for turning applications where coolant cools the cutting insert and the tool comprises means to coolant-tightly seal the nozzle relative to the holder body to avoid leakage of coolant.

According to another aspect of the present invention, there are two coolant channels extending at opposite sides of the through hole thereby facilitating increase in coolant flow while keeping the nozzle sturdy.

According to another aspect of the present invention, the first opening is situated between the through hole and the rear end to make more space for fastening means.

According to another aspect of the present invention, the coolant channel or the first opening is surrounded by a seal such as an O-ring.

According to another aspect of the present invention, the nozzle is a one-piece unit preferably made through additive manufacturing, such that it has no plugged holes.

According to another aspect of the present invention, the fastening member is a screw which extends along a hole in the holder body, said screw being intersected by upper and lower imaginary planes of the cutting insert.

### BRIEF DESCRIPTION OF THE DRAWINGS

The features and advantages of the present invention are well understood by reading the following detailed description in conjunction with the drawings in which like numerals indicate similar elements and in which:

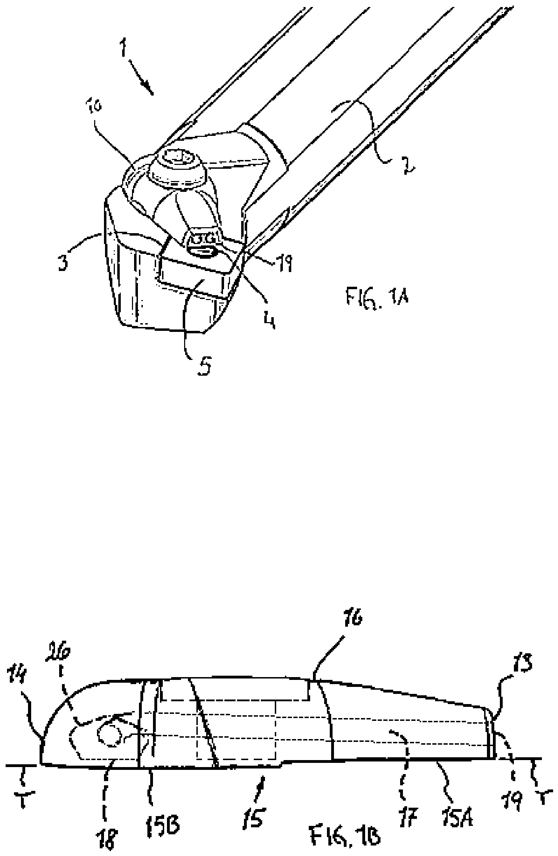

FIG. 1A is a perspective view of a cutting tool according to an aspect of the present invention;
FIG. 1B is a side view of a nozzle of the cutting tool in Fig. 1A;

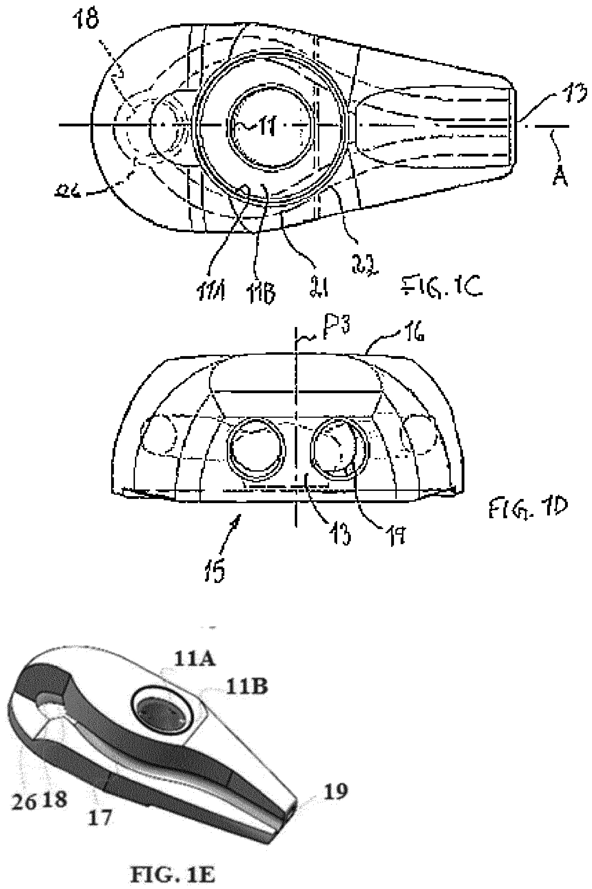

FIG. 1C is a top view of the nozzle;
FIG. 1D is a front view of the nozzle;
FIG. 1E is a perspective front view of the nozzle, partially in section;

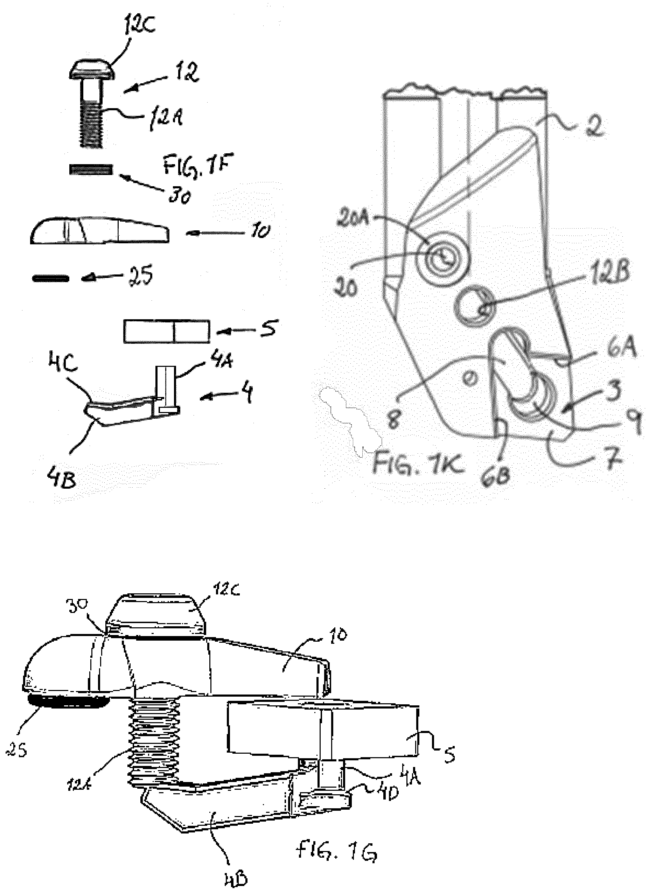

FIG. 1F is an exploded side view of components including the nozzle of Figs. 1B-1E of the cutting tool according to an aspect of the present invention;
FIG. 1G is a side view of the components;

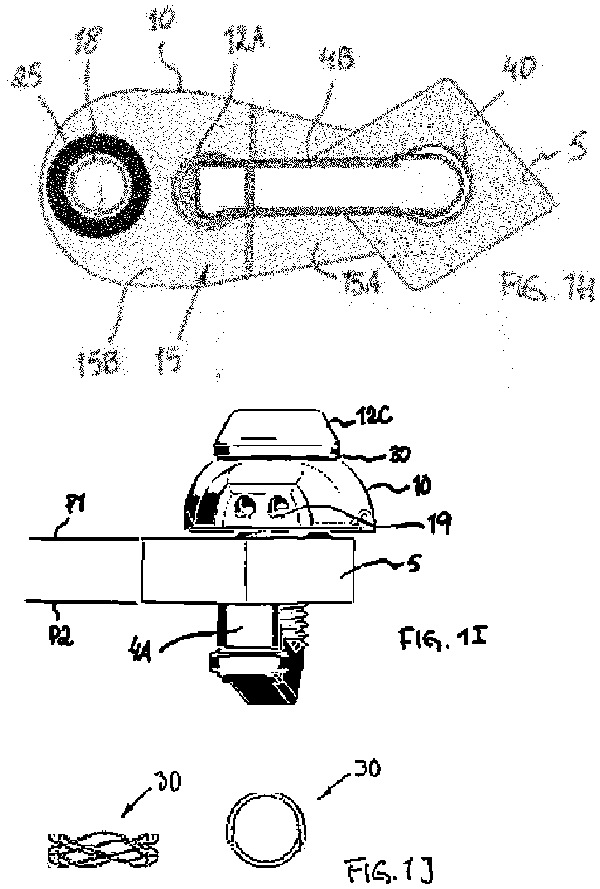

FIG. 1H is a bottom view of the components;
FIG. 1I is a front view of the components;
FIG. 1J is a side view and top view of a spring included in the components;
FIG. 1K is a top view of a holder body of the cutting tool in Fig. 1A.
The figures 1B, 1C, and 1D have been depicted by at least partly transparent illustrations for ease of understanding. It is however understood that the tools themselves are not transparent.

### DETAILED DESCRIPTION

Reference is made to FIGS. 1A-1K showing a cutting tool 1 in accordance with the present invention. The shown cutting tool 1 may be a turning tool for internal metal machining and comprises a holder body 2 having a pocket 3, a clamping means in the shape of a locking member 4 and an inducer or nozzle 10. The pocket 3 is conventional and may have a bottom surface 7 and two upstanding walls 6A and 6B. The bottom surface 7 may have a recess 8 to accommodate the locking member 4. The bottom surface may be provided with a removable shim, not shown. The recess 8 is key lock shaped in top view, e.g. a combination of a circle and a rectangle, and may have a ledge 9 below about a center of the bottom surface 7. The indexable cutting insert 5 is clamped in the pocket by means of an L-shaped locking member 4 projecting into a hole of the cutting insert. In the illustrated embodiment, the cutting insert and pocket are generally diamond in shape but may have other shapes. The L-shaped locking member urges the converging sides of the cutting insert 5 against upstanding walls 6A and 6B, which are of substantially complementary shape to the sides of the cutting insert. The locking member forms one leg 4B of an L-shape pivotally arranged in the recess 8 in the holder 2, the other leg 4A of which member extends through a hole of the cutting insert 5. The locking member may have a rim 4D which rests upon the ledge 9 in the recess 8. Actuating means or fastening means 12 is provided to move the leg 4B downwardly and by this cause a pivoting action of the locking member around an axis and about a fulcrum point of the rim 4D and the ledge 9. The said axis forms substantially a right angle with the direction in which the leg 4B extends. In the illustrated embodiment, the means 12 is in the form of a screw 12A threadably engaged in a hole 12B in the holder 2. The screw 12A may have a single threaded end portion and may have an end portion arranged to engage the free end 4C of the leg 4B of the L-shaped locking member 4, when the screw 12A is turned, to cause said pivoting action of the locking member around the fulcrum point formed in the holder 2. The leg 4A passes through the recess 8 in the holder, the opening being shaped and dimensioned so as not to impede desired pivotal movement of the legs. The locking member leg 4A extends into a central hole in the cutting insert and serves to detachably secure the cutting insert in the pocket 3. The pivotal movement of the leg 4A causes the cutting insert 5 to move towards the walls 6A and 6B and be clamped thereto.

The screw 12A may extend along a hole 12B in the holder body 2. The screw is intersected by upper (P1) and lower (P2) imaginary planes of the cutting insert. The planes P1 and P2 may be parallel and each plane may touch at least two, preferably three or four, corner portions of the upper and lower surface of the cutting insert, respectively. The nozzle 10 exhibits mirror symmetry about a first plane P3 containing a longitudinal axis A of the nozzle as can be seen, for example, in FIG. 1D. The nozzle may be a one-piece unit. The nozzle includes a forward end 13, a rear end 14 and a bottom face 15. The bottom face 15 comprises a first surface 15A and a second surface 15B, the first surface being generally recessed relative to the second surface. A single through hole 11 extends between the bottom face 15 or the second surface 15B and an opposite top face 16. The single through hole 11 may be surrounded by an enlarged cavity 11A at the top face 16. At least one internal coolant channel 17 is provided in the nozzle that extends from a first opening 18 to a second opening 19, and is preferably not having any strength reducing or plugged holes such as stop screws in holes. By the expression "internal coolant channel" is here primarily meant self-contained channels where the walls of the channel are within the nozzle. The first opening 18 is connectable to the coolant supply conduit 20 in the holder body. The first opening 18 is located at the second surface 15B of the bottom face 15. The second surface 15B projects such that a tangent T to the first surface 15A facing the cutting insert 5, and perpendicular to a through hole axis intersects the first opening or the channel 17. The first opening 18 is positioned between the through hole 11 and the rear end 13 and may comprise a chamber 26 in flow communication with the second opening 19. The second opening 19 serves as exit for the coolant at the forward end 13. The at least one coolant channel 17 and the first opening 18 are spaced from, i.e. not in contact with the through hole 11. The at least one coolant channel 17 may follow a smooth path without sudden directional changes such that coolant flow is not obstructed. At least a first portion 21 of the coolant channel 17 transits mathematically smooth or continuous into a second portion 22 of the coolant channel. The first and second portions of the coolant channel are designed such that first derivatives thereof are continuous if their lower peripheries are seen as mathematical curves for example as in the top view of Fig. 1C. Thereby, there will be reduced risk for oil traps when using oil mist as coolant.

Suitably, the nozzle 10 is made through precision casting or additive manufacturing such as metal 3D printing processes which use binders, or fully dense metal processes like selective laser sintering (SLS) or direct metal laser sintering (DMLS). The latter technology uses a high power laser to fuse small particles of metal powders into a nozzle that has the described three dimensional shape. The laser selectively fuses the powdered metal by scanning the cross-sections (or layers) generated by a three dimensional modeling program on the surface of a powder bed. After each cross-section is scanned, the powder bed is lowered by one layer thickness. Then a new layer of material is applied on top and the process is repeated until the nozzle is completed.

The nozzle 10 is held to the holder body by the fastening member 12, preferably by the screw 12A. The single through hole 11 receives the fastening member 12 carrying a spring 30 and that is threadedly secured to a hole 12B in the holder body. The cavity 11A bottom 11B is intended to serve as a seat for the spring 30, such as a multiwave compression spring of for example stainless steel. Multiwave compression springs may be used in applications where space problems in length preclude the option of using a normal compression spring. The spring 30 is more closely shown in FIG. 1J. Other spring means can be used such as rubber washers. The nozzle does not have a front projection to engage a wall of the through hole of the cutting insert. The coolant is led through conduits passing through the holder body and requires connecting passageways and a deformable seal to lead the coolant to a discharge exit 19.

The fastening member 12 may have a head 12C which has an underside that can act on the spring 30 and urge the nozzle towards the holder. A seal element 25, such as an O-ring may be secured to or be loosely held by the nozzle or be secured to or be loosely held by a concave cavity 20A surrounding the conduit 20 opening in the holder body 2. The seal element 25 may be compressed between the nozzle and the holder body during the tightening of the fastening member to coolant-tightly seal the conduit 20 opening.

At mounting of the cutting insert 5 to the holder body 2 the locking member 4 sits in the recess 8 by interaction of the rim 4D and the ledge 9 in a conventional manner. The screw 12A is passed through the spring means 30 and the nozzle hole 11 and threaded through the hole 12B in the holder body 2. Suitably, the nozzle is rotated about the screw 12 to a position where it does not interfere with the space needed to mount the cutting insert. The end of the screw 12A will abut against the leg 4B and thereby cause pivotal movement of the leg 4A. If a cutting insert 5 is mounted in the pocket 3 the leg 4A will urge the cutting insert in direction towards the upstanding walls 6A and 6B. The nozzle is rotated about the screw into desired position when the cutting insert has been mounted. The screw head 12C will act on the spring means 30 and force the nozzle in direction towards the holder body. By choosing the correct elasticity property for the spring means 30 and the correct direction of the nozzle, the nozzle will become clamped against the holder body via the interaction of the seal 25 and the concave cavity 20A. The nozzle first surface 15A is spaced from, i.e. not in contact with the cutting insert 5 in assembled state. The holder body and/or the nozzle may be provided with means to guide the nozzle to a desired direction, such as protrusions acting peripherally on the nozzle or at least one protrusion acting in the forward end of the nozzle acting centrally on the cutting insert. The nozzle in this embodiment is not meant to clamp on the cutting insert but can do so if for example a thicker O-ring is used instead of the O-ring 25 shown. In the latter case the nozzle will tilt about an axis perpendicular to the length axis A and the forward end thereof will contact the cutting insert.

In use the shown tool will be turning metal workpieces while coolant may flow in order through the holder body 2, the coolant supply conduit 20, the seal 30, the fluid channel 17 and from the exit 19 to at least one active cutting edge.

Stated another way, a single fastening member 12 or screw 12A secures both the cutting insert 5 and the nozzle 10.

Tool life generally increases with increase in coolant supply pressure. This can be attributed to the ability of the high-pressure coolant to lift the chip and gain access closer to the cutting interface. This action leads to a reduction of the seizure region, thus lowering the friction coefficient, which in turn results in reduction in cutting temperature and cutting forces. Preferably the pressure used in the discussed embodiments is above 30 bar, preferably above 100 bar coolant pressure.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such. Terms such as "upper", "lower", "top", "bottom", "forward" and "rear" refer to features as shown in the current drawings and as perceived by the skilled person.

While this invention has been illustrated and described in accordance with a preferred embodiment, it is recognized that variations and changes may be made therein without departing from the invention as set forth in the claims.

## Claims

1. A cutting tool (1) comprising a holder body (2) having a pocket (3), a cutting insert (5) and a nozzle (10), said nozzle (10) having a single through hole (11) for a fastening member (12), said nozzle (10) having a forward end (13), a rear end (14) and a bottom face (15), said through hole (11) extending between the bottom face (15) and an opposite top face (16), at least one internal coolant channel (17) being provided in the nozzle (10) and extending from a first opening (18) to a second opening (19), said first opening (18) connecting to a coolant supply conduit in the holder body (2), said second opening (19) serving as exit for the coolant at the forward end (13), wherein the at least one coolant channel (17) and the first opening (18) are spaced from the through hole (11), and wherein a single fastening member (12) or screw (12A) secures both the cutting insert (5) and the nozzle (10), **characterized in that** the cutting tool (1) comprises a clamping means in the shape of an L-shaped locking member (4), wherein the cutting insert (5) is clamped in the pocket (3) by means of the L-shaped locking member (4) projecting into a hole of the cutting insert (5), and wherein the nozzle bottom face (15A) is spaced from the cutting insert (5) in assembled state.

2. The cutting tool (1) according to claim 1, wherein the nozzle (10) has a longitudinal axis (A) that intersects the through hole (11).

3. The cutting tool (1) according to claim 1 or 2, wherein the first opening (18) is located at a portion or second surface (15B) of the bottom face (15), said portion (15B) projecting such that a tangent (T) to the bottom face (15) facing the cutting insert (5), and perpendicular to a through hole axis (C) intersects the first opening (18) or the channel (17).

4. The cutting tool (1) according to claim 1, 2 or 3, wherein the nozzle (10) is a removable nozzle for turning applications and wherein the cutting tool (1) comprises means (25) to coolant-tightly seal the nozzle (10) relative to the holder body (2).

5. The cutting tool (1) according to anyone of claims 1 - 4, wherein there are two coolant channels (17) extending at opposite sides of the through hole (11).

6. The cutting tool (1) according to anyone of claims 1 - 5, wherein the first opening is situated between the through hole (11) and the rear end (14).

7. The cutting tool (1) according to anyone of claims 1 - 6, wherein the coolant channel (17) or the first opening (18) is surrounded by a seal such as an O-ring (25).

8. The cutting tool (1) according to anyone of claims 1 - 7, wherein the nozzle (10) is a one-piece unit.

9. The cutting tool (1) according to anyone of claims 1 - 8, wherein the fastening member (12) is a screw (12A) which extends along a hole (12B) in the holder body (2), said screw (12A) being intersected by upper (P1) and lower (P2) imaginary planes of the cutting insert (5).

## Patentansprüche

1. Schneidwerkzeug (1) mit einem Halterkörper (2), der eine Tasche (3), einen Schneideinsatz (5) und eine Düse (10) aufweist, wobei die Düse (10) ein einzelnes Durchgangsloch (11) für ein Befestigungselement (12) aufweist, wobei die Düse (10) ein vorderes Ende (13), ein hinteres Ende (14) und eine Unterseite (15) aufweist, wobei das Durchgangsloch (11) zwischen der Unterseite (15) und einer gegenüberliegenden Oberseite (16) verläuft, mindestens ein innerer Kühlmittelkanal (17) in der Düse (10) vorgesehen ist und sich von einer ersten Öffnung (18) zu einer zweiten Öffnung (19) erstreckt, wobei die erste Öffnung (18) mit einer Kühlmittelzufuhrleitung im Halterkörper (2) verbunden ist und die zweite Öffnung (19) als Ausgang für das Kühlmittel am vorderen Ende (13) dient, wobei der mindestens eine Kühlmittelkanal (17) und die erste Öffnung (18) von dem Durchgangsloch (11) beabstandet sind, und wobei ein einziges Befestigungselement (12) oder eine einzige Schraube (12A) sowohl den Schneideinsatz (5) als auch die Düse (10) sichert, **dadurch gekennzeichnet, dass** das Schneidwerkzeug (1) eine Einspannvorrichtung in Form eines L-förmigen Befestigungselements (4) aufweist, wobei der Schneideinsatz (5) mittels des L-förmigen Befestigungselements (4), das in ein Loch des Schneideinsatzes (5) hineinragt, in der Tasche (3) eingespannt wird, und wobei die Unterseite der Düse (15A) im montierten Zustand von dem Schneideinsatz (5) beabstandet ist.

2. Schneidwerkzeug (1) nach Anspruch 1, wobei die Düse (10) eine Längsachse (A) aufweist, die das Durchgangsloch (11) schneidet.

3. Schneidwerkzeug (1) nach Anspruch 1 oder 2, wobei die erste Öffnung (18) an einem Abschnitt oder einer zweiten Fläche (158) der Unterseite (15) angeordnet ist, wobei der Abschnitt (158) so vorsteht, dass eine Tangente (T) an die Unterseite (15), die dem Schneideinsatz (5) zugewandt ist, und die senkrecht zu einer Durchgangslochachse (C) angeordnet ist, die erste Öffnung (18) oder den Kanal (17) schneidet.

4. Schneidwerkzeug (1) nach Anspruch 1, 2 oder 3, wobei die Düse (10) eine abnehmbare Düse für Drehanwendungen ist und wobei das Schneidwerkzeug (1) Mittel (25) zum kühlmitteldichten Abdichten der Düse (10) relativ zum Halterkörper (2) aufweist.

5. Schneidwerkzeug (1) nach einem der Ansprüche 1 bis 4, wobei zwei Kühlmittelkanäle (17) vorhanden sind, die sich auf gegenüberliegenden Seiten des Durchgangslochs (11) erstreck

6. Schneidwerkzeug (1) nach einem der Ansprüche 1-5, wobei die erste Öffnung zwischen dem Durchgangsloch (11) und dem hinteren Ende (14) angeordnet ist.

7. Schneidwerkzeug (1) nach einem der Ansprüche 1 bis 6, wobei der Kühlmittelkanal (17) oder die erste Öffnung (18) von einer Dichtung wie einem O-Ring (25) umgeben ist.

8. Schneidwerkzeug (1) nach einem der Ansprüche 1-7, wobei die Düse (10) eine einteilige Einheit ist.

9. Schneidwerkzeug (1) nach einem der Ansprüche 1-8, wobei das Befestigungselement (12) eine Schraube (12A) ist, die sich entlang eines Lochs (12B) im Halterkörper (2) erstreckt, wobei die Schraube (12A) von einer oberen (P1) und einer unteren (P2) imaginären Ebene des Schneideinsatzes (5) geschnitte

## Revendications

1. Outil de coupe (1) comprenant un corps de support (2) présentant une cavité (3), une plaquette de coupe (5) et une buse (10), ladite buse (10) présentant un unique trou traversant (11) destiné à un élément de fixation (12), ladite buse (10) présentant une extrémité avant (13), une extrémité arrière (14) et une face inférieure (15), ledit trou traversant (11) s'étendant entre la face inférieure (15) et une face supérieure opposée (16), au moins un canal à réfrigérant interne (17) étant ménagé dans la buse (10) et s'étendant depuis une première ouverture (18) jusqu'à une seconde ouverture (19), ladite première ouverture (18) étant reliée à un conduit d'alimentation en réfrigérant dans le corps de support (2), ladite seconde ouverture (19) servant de sortie pour le réfrigérant au niveau de l'extrémité avant (13), où le au moins un canal à réfrigérant (17) et la première ouverture (18) sont espacés du trou traversant (11), et où un unique élément de fixation (12) ou une unique vis (12A) fixe à la fois la plaquette de coupe (5) et la buse (10), **caractérisé en ce que** l'outil de coupe (1) comprend un moyen de serrage sous la forme d'un élément de verrouillage en forme de L (4), où la plaquette de coupe (5) est serrée dans la cavité (3) au moyen de l'élément de verrouillage en forme de L (4) faisant saillie dans un trou de la plaquette de coupe (5), et où la face inférieure de buse (15A) est espacée de la plaquette de coupe (5) dans l'état assemblé.

2. Outil de coupe (1) selon la revendication 1, dans lequel la buse (10) présente un axe longitudinal (A) qui coupe le trou traversant (11).

3. Outil de coupe (1) selon la revendication 1 ou 2, dans lequel la première ouverture (18) est située au niveau d'une partie ou seconde surface (15B) de la face inférieure (15), ladite partie (15B) faisant saillie de telle sorte qu'une tangente (T) à la surface inférieure (15) orientée vers la plaquette de coupe (5), et perpendiculaire à un axe de trou traversant (C) coupe la première ouverture (18) ou le canal (17).

4. Outil de coupe (1) selon la revendication 1, 2 ou 3, dans lequel la buse (10) est une buse amovible (10) destinée à des applications de tournage et où l'outil de coupe (1) comprend un moyen (25) permettant d'assurer une étanchéité au réfrigérant de la buse (10) par rapport au corps de support (2).

5. Outil de coupe (1) selon l'une quelconque des revendications 1 à 4, dans lequel il existe deux canaux à réfrigérant (17) s'étendant au niveau de côtés opposés du trou traversant (11).

6. Outil de coupe (1) selon l'une quelconque des revendications 1 à 5, dans lequel la première ouverture est située entre le trou traversant (11) et l'extrémité arrière (14).

7. Outil de coupe (1) selon l'une quelconque des revendications 1 à 6, dans lequel le canal à réfrigérant (17) ou la première ouverture (18) est entouré par un joint d'étanchéité tel qu'un joint torique (25).

8. Outil de coupe (1) selon l'une quelconque des revendications 1 à 7, dans lequel la buse (10) est une unité monobloc.

9. Outil de coupe (1) selon l'une quelconque des revendications 1 à 8, dans lequel l'élément de fixation (12) est une vis (12A) laquelle s'étend le long d'un trou (12B) dans le corps de support (2), ladite vis (12A) étant coupée par des plans imaginaires supérieur (P1) et inférieur (P2) de la plaquette de coupe (5).
